Europäisches Patentamt

European Patent Office

Office européen des brevets

(19)

(11)  EP 0 885 504 B1

(12)  **FASCICULE DE BREVET EUROPEEN**

(45)  Date de publication et mention
de la délivrance du brevet:
**13.06.2001   Bulletin 2001/24**

(21)  Numéro de dépôt: **97908316.9**

(22)  Date de dépôt: **06.03.1997**

(51)  Int Cl.⁷: $H04L\ 12/14$

(86)  Numéro de dépôt international:
**PCT/FR97/00401**

(87)  Numéro de publication internationale:
**WO 97/33404 (12.09.1997 Gazette 1997/39)**

(54)  **PROCEDE DE FACTURATION POUR RESEAUX DE TRANSMISSION DE DONNEES**

GEBÜHRENERFASSUNGSVERFAHREN FUR DATAKOMMUNIKATIONSNETZWERKE

DATA TRANSMISSION NETWORK BILLING METHOD

(84)  Etats contractants désignés:
**AT BE CH DE DK ES FI FR GB IT LI LU MC NL PT
SE**

(30)  Priorité:  **08.03.1996  FR 9602930**

(43)  Date de publication de la demande:
**23.12.1998   Bulletin 1998/52**

(73)  Titulaire: **ENITION SA
92138 Issy les Moulineaux Cédex (FR)**

(72)  Inventeur: **Leleu, Jean-Luc
75017 Paris (FR)**

(74)  Mandataire: **Ballot, Paul et al
Cabinet Ballot
7, rue Le Sueur
75116 Paris (FR)**

(56)  Documents cités:
• **COMPUTER COMMUNICATIONS REVIEW, vol.
20, no. 5, Octobre 1990, NEW YORK US, pages
56-66, XP000167877 D.ESTRIN ET AL: "DESIGN
CONSIDERATIONS FOR USAGE ACCOUNTING
AND FEEDBACK IN INTERNETWORKS"**

## Description

La présente invention est relative aux systèmes de paiement et de monnaie électronique, ainsi qu'aux systèmes de facturation ou de paiement du transport des données dans un réseau. Plus particulièrement, la présente invention est relative à un procédé ou un appareil permettant de créditer ou de débiter un jeton contenant un crédit d'unités de péage dans un paquet de données véhiculés par un réseau de transmission.

ETAT DE L'ART

L'augmentation de l'utilisation commerciale du réseau Internet soulève le problème du financement de ce réseau.

Sur le réseau Internet, il est très difficile ou trop coûteux d'utiliser les principes de taxation en usage:

- facturation en fonction de la durée de connexion entre deux terminaux pour une vitesse de transmission donnée, et une distance donnée.
- facturation en fonction de la quantité des données échangées entre deux terminaux suivant la vitesse de transmission des données.

Le réseau Internet n'a pas d'administration centralisée, l'ensemble des utilisateurs du réseau n'est répertorié par aucune entité administrative. Cela est dû à l'aspect coopératif et décentralisé d'un tel réseau, sans cesse en expansion

A la différence des réseaux téléphoniques ou d'autres types de réseaux de transports de données comme les réseaux utilisant le protocole X25. Le réseau Internet utilise un protocole IP en mode datagrame non connecté qui transporte les données sous forme de paquets d'informations.

Les deux caractéristiques précédentes constituent un handicap pour financer le transport des informations sur Internet. C'est pourquoi le financement du réseau s'effectue généralement en facturant uniquement l'accès en un point physique du réseau. Cette facturation est soit forfaitaire, soit elle prend en compte la quantité de données émises vers l'ensemble du réseau, ou bien la quantité de données reçues de la totalité du réseau. D'autre part les opérateurs de télécommunication qui gèrent des systèmes autonomes sur Internet doivent développer des politiques d'accords commerciaux et de partenariat pour accepter le transit des sites tiers par leurs propres sites. De ces politiques découlent les politiques de routage.

Ce système de taxation ne permet pas de facturer justement et équitablement le transport des informations suivant le chemin parcouru et la vitesse de transmission.

Avec le système de taxation actuel, le transport d'informations de Paris vers Tokyo sera facturé autant que le transport de Paris vers Lyon. Pourtant le chemin emprunté par les données dans le premier cas va nécessiter une infrastructure plus importante et plus coûteuse pour l'acheminement des données.

Le système de taxation actuel ne permet donc pas de rendre compte du coût économique exact du service fourni pour le transport des données.

Par ailleurs, il ne permet pas en utilisant une méthode simple de favoriser certains paquets par rapport à d'autres et donc d'assurer une qualité de service ou une vitesse supérieure en échange d'une compensation financière supérieure.

Il ne permet pas non plus de taxer équitablement certains paquets qui nécessitent un traitement particulier plus coûteux concernant l'authentification, le cryptage ou l'administration du réseau. Il ne permet pas non plus de facturer simplement un accès global à plusieurs ordinateurs du réseau capables de fournir des services peu coûteux. Il ne permet pas une facturation similaire à celle du type kiosque sur le réseau Minitel. L'article dans la revue "COMPUTER COMMUNICATIONS REVIEW", vol. 20, n° 5, Octobre 1990, pages 56-66 de D. ESTRIN et Al et intitulé "DESIGN CONSIDERATIONS FOR USAGE ACCOUNTING AND FEEDBACK IN INTERNET WORKS" indique qu'il y a opportunité à mettre en place un système de facturation dans le réseau INTERNET ; il donne plusieurs approches de ce système sans évoquer les moyens et procédés pour les mettre en oeuvre.

Le procédé selon l'invention permet à chaque paquet de données véhiculées par le réseau d'acquitter. de par lui-même, le coût de son transport, ou le coût d'un service ou d'une opération en rapport avec le contenant ou le contenu d'un paquet de transmission.

L'appareil ou système couplé à un réseau de transmission de données est capable de calculer et d'authentifier avec un mécanisme de signature numérique, une valeur numérique (jeton de péage) correspondant à un crédit d'unités de péages.

L'appareil selon la présente invention est capable d'insérer dans les paquets de données véhiculées par le réseau (en général, à l'émission du paquet), un en-tête de péage contenant une valeur numérique (jeton de péage) qui correspond à un crédit d'unités de péages.

L'appareil selon la présente invention est capable de vérifier si les paquets de données de transmission contiennent un en-tête de péage (en général, à la réception du paquet) puis, il peut authentifier avec un mécanisme de signature numérique ou électronique, la valeur numérique du jeton de péage correspondant au crédit d'unités de péages qui est associé au paquet de données. Si l'authentification est positive, l'appareil selon la présente invention est capable de débiter une partie ou l'ensemble du crédit associé à la valeur du crédit d'unités de péages, ce qui correspond à modifier la valeur numérique du jeton.

Suivant le type de jeton utilisé, l'appareil ou système selon la présente invention est capable de stocker une partie des données constituant la valeur numérique du jeton correspondant au crédit d'unités de péages associé à un paquet, afin de permettre l'obtention d'une compensation financière en échange de ces données. Il pourra aussi si les valeurs contenues dans le jeton ne peuvent pas être stockées, créditer un compte associé au créateur de la valeur d'origine du crédit d'unités de péages contenu dans un paquet de données. Dans le cas précédent, l'appareil selon la présente invention pourra authentifier avec un mécanisme de signature numérique (avec une clé propre au créateur du jeton) les valeurs des comptes crédités afin de pennettre l'obtention d'une compensation financière en échange de ces valeurs.

L'appareil suivant la présente invention est capable, une fois le crédit associé au jeton débité, de déclencher une opération électronique ou physique fonction du contenant ou du contenu du paquet de données de transmission. Le contenant ici représente l'entête du paquet adresse de départ, d'arrivée et toutes les autres informations nécessaires au réseau pour acheminer le paquet. Le contenu représente les données associées à ces informations de contrôle.

L'appareil suivant la présente invention est capable d'authentifier la valeur numérique d'un jeton de péage afin de déclencher une opération électronique ou physique sans modifier le crédit d'unités de péages associée au jeton de péage.

L'appareil suivant la présente invention est capable de calculer une valeur correspondant au crédit d'unités de péages (jeton de péage), associée à un paquet de données qui est fonction de l'adresse de destination du paquet. Il peut construire et utiliser des tables de correspondances entre des adresses de destinations ou des groupes d'adresses de destinations, et le nombre de noeuds à traverser, le type d'opérations que ces noeuds peuvent effectuer, les qualités de services de ces opérations. Il peut aussi calculer une valeur numérique constituant un crédit d'unités de péages (jetons de péages), associée à un paquet de données, qui est fonction, du nombre d'opérations réalisables avec ce crédit, de la qualité de service de ces opérations, et du type de ces opérations.

L'appareil suivant la présente invention est capable d'authentifier pendant le processus de création et de modification du jeton, la valeur numérique associée au crédit d'unités de péages (jetons de péages), en appliquant des mécanismes de signatures numériques dont les principes de calcul sont issus entre autre, de la cryptographie et de la constitution de certaines fonctions de hashing. Il peut aussi incorporer dans un jeton de péage des valeurs constituant des pièces de monnaie électroniques, préalablement stockées dans la mémoire du système de traitement d'informations. Toutes les opérations d'authentification, par les mécanismes de signature numérique, des valeurs numériques des jetons de péages peuvent être effectuées de manière aléatoire ou probabiliste.

L'appareil suivant la présente invention est capable de recevoir et d'émettre vers d'autres appareils couplés au réseau de transmission de données, des séquences de codes exécutables ou interprétables par une machine, signés numériquement et capable d'authentifier de modifier, et de construire les valeurs numériques des jetons de péages.

L'appareil suivant la présente invention peut comporter un scellé attestant que l'appareil n'a pas été transformé, ouvert ou remplacer, afin de préserver l'intégrité des fonctions que l'invention réalise.

BREVE DESCRIPTION DES DESSINS

FIG. 1 décrit le support électronique d'un système de traitement de l'information dans lequel est implémentée la présente invention.

FIG. 2 décrit une topologie possible de réseau dans laquelle nous pouvons décrire le fonctionnement de la présente invention dans un environnement Internet.

FIG. 3 décrit les modifications du contenu d'un champ utilisé dans la présente invention, ce champ étant un élément de la structure de contrôle d'un paquet de données.

FIG. 4 décrit un modèle d'en-tête possible pour la structure de péage.

NOTATION ET NOMENCLATURE

La description détaillée qui suit utilise largement les représentations symboliques associées aux opérations des systèmes de traitement d'information dans le contexte des télécommunications et des réseaux informatiques. Ces descriptions de fonctionnement et ces représentations sont celles utilisées par les hommes de l'art afin d'exposer leurs réflexions et leurs travaux à leurs confrères.

Un algorithme est généralement perçu comme étant une séquence autonome d'étapes se succédant vers un résultat désiré. Ces étapes nécessitent des manipulations physiques de quantités physiques. Habituellement ces quantités prennent la forme de signaux électriques ou magnétiques, qui peuvent êtres stockés, transférés, combinés, comparés, affichés, et manipulés de diverses manières. Il est habituellement considéré pour des raisons de commodité d'usage de référer à ces signaux en terme de bits, octets, valeurs, éléments, symboles, opérations, messages, termes, nombres, champs, jetons.

Il doit être gardé à l'esprit, que tous ces termes et les termes similaires sont à associer aux quantités physiques appropriées et sont commodes pour faire références à ces quantités.

Dans la présente invention, les opérations auxquelles il est fait référence sont des opérations exécutées par des machines. Les machines qui sont adaptées à la réalisation des opérations de la présente invention sont des ordinateurs standards ou des appareils utilisés dans les réseaux de télécommunications pour aiguiller le trafic des paquets de données de transmission. Elles sont référencées respectivement, comme des « noeuds » ou comme des « routeurs ». Nous pouvons même désigner un ordinateur ou un appareil électronique dédié à la réalisation de la présente invention comme un serveur de péage, ou passerelle de péage ou «payeur». Dans tous les cas, le lecteur est prié de garder à l'esprit la distinction entre d'une part: les opérations à faire effectuer par l'ordinateur ou le système de traitement d'information pour assurer le fonctionnement de la présente invention, et d'autre part, la manière dont l'ordinateur ou le système de traitement de l'information de va fonctionner et effectuer ces opérations. La présente invention décrit les opérations à faire exécuter à un système de traitement de l'information couplé à divers réseaux de télécommunications pour traiter des signaux électriques ou d'autres signaux physiques afin de générer les signaux physiques désirés.

La présente invention est aussi relative aux appareils et systèmes qui permettent d'effectuer ces opérations. Ces appareils peuvent être spécialement construits à cet effet ou ils peuvent consister en un ordinateur standard reconfiguré par un programme stocké dans le système de traitement de l'information. Le dispositif qui réalise les différentes étapes du processus de la présente invention n'est inhérent à aucun ordinateur ou appareil en particulier. Une grande variété de machines peut être utilisée si elles sont configurées et programmées, ou construites de manière qu'elles incorporent la connaissance de la présente invention. Il est même possible de construire spécialement un appareil qui réalise les différentes étapes du dispositif de la présente invention. Les éléments nécessaires au fonctionnement de ce type d'appareils seront déterminés par la description qui suit.

L'invention concerne donc un procédé pour déterminer les éléments de facturation du coût, à au moins un organisme de centralisation monétaire, des opérations effectuées par un réseau de transmission de données par paquet, le réseau comprenant une pluralité de noeuds de communication réalisant les opérations par l'intermédiaire d'un ou plusieurs opérateurs et desservant une pluralité d'utilisateurs, caractérisé en ce qu'il comprend les étapes principales suivantes consistant à :

(a) - affecter à chaque paquet de données à transmettre par un utilisateur du réseau une première valeur représentative d'un crédit d'unités monétaires dites de péage. ainsi que l'identité de l'organisme de centralisation monétaire fournisseur du crédit, le montant du crédit correspondant au coût des opérations à effectuer sur le paquet de données dans le réseau de transmission de données via au moins un noeud de communication;

(b) - mémoriser la première valeur représentative ainsi que l'identité de l'organisme de centralisation monétaire concerné;

(c) - diminuer, dans au moins le noeud de communication, la première valeur représentative d'un montant représentatif du coût des opérations à effectuer sur le paquet de données dans le noeud concerné ;

(d) - mémoriser le montant représentatif de la diminution de la valeur représentative ainsi que l'identité de l'organisme de centralisation monétaire ;

(e) - additionner, pour chaque utilisateur et chaque organisme de centralisation monétaire, les premières valeurs représentatives mémorisées pour obtenir un premier montant total dû par l'utilisateur concerné aux différents opérateurs du réseau via l'organisme de centralisation monétaire, et;

(f) - additionner, pour chaque opérateur et chaque organisme de centralisation monétaire, les montants représentatifs mémorisés pour obtenir un deuxième montant total dû à l'opérateur concerné par les différents utilisateurs du réseau via l'organisme de centralisation monétaire.

L'utilisateur du réseau achète à l'organisme de centralisation monétaire au moins un jeton de péage représentatif d'unités monétaires, la première valeur représentative étant débitée sur le jeton de péage acheté par l'utilisateur.

L'opération (c) consiste en outre à :

- effectuer les opérations sur le paquet de données si le montant représentatif est égal ou inférieur à la valeur représentative,

- ne pas effectuer les opérations sur le paquet de données si le montant représentatif est supérieur à la valeur représentative.

Selon une autre caractéristique de l'invention, au moins la valeur représentative du crédit d'unités monétaires et le montant représentatif de la diminution de la valeur représentative sont des nombres numériques qui résultent de l'application de fonctions d'authentification à la valeur représentative et au montant représentatif.

La fonction d'authentification est aussi appliquée au contenu du paquet de données et à l'identité de l'organisme de centralisation monétaire.

Les fonctions d'authentification sont du type signature numérique, des procédés mettant en oeuvre des fonctions de hashing et des procédés de cryptographie.

Selon une autre caractéristique de l'invention, une fonction de non duplication est appliquée à la valeur représentative du crédit d'unités monétaires de manière à empêcher d'utiliser plus d'une fois la valeur représentative.

L'authentification des valeurs représentatives et des montants représentatifs est effectuée de manière aléatoire et probabiliste.

Dans le procédé, il peut être prévu que la clé du procédé de signature électronique soit transmise à au moins un opérateur du réseau pour lui permettre d'effectuer le codage et l'authentification des nombres numériques en tant que de besoin.

Pour mettre en oeuvre le procédé décrit ci-dessus, le réseau de transmission de données doit comprendre, à chaque noeud où des opérations doivent être effectuées, au moins un système de traitement de données programmé de manière à réaliser les différentes étapes du procédé. Ce système de traitement de données peut être individualisé en tant que système séparé du système informatique gérant le noeud, ou être intégré au système informatique par l'adjonction de logiciels appropriés.

DESCRIPTION DETAILLEE DE L'INVENTION

Dans cette description, nous détaillons plus particulièrement certains aspects comme la configuration et la topologie des systèmes et des réseaux, les paquets représentatifs et leur structures, certains messages, certaines étapes de calcul, certaines interfaces, etc., afin de permettre une meilleure compréhension de la présente invention. Toutefois, il apparaîtra à l'homme de l'art que la présente invention pourra être réalisée sans que ces détails spécifiques lui soient fournis. En outre, les circuits, les composants électroniques et les architectures couramment utilisés et bien connus par les gens de l'art ne sont pas explicités en détail pour ne pas obscurcir la description de la présente invention. De plus certains termes comme «connaît», «vérifie», «examine», «utilise», «trouve», «comprend», «détermine», «provoque», «authentifie», etc., sont utilisés dans cette spécification et sont considérés comme des termes de l'art. L'utilisation de ces termes, qui font référence aux diverses fonctions du système, et qui pourrait être considérée comme une personnification du calculateur, ou du système électronique pour le profane, ont pour utilité de simplifier la description.

Par exemple, lorsque l'on fait référence à un système électronique, le terme «déterminer» appliqué à une valeur, est simplement une manière plus rapide d'expliquer que le système a été programmé ou construit de manière à permettre la réalisation de cette opération.

Le lecteur est donc prié de ne pas confondre les fonctions décrites ici avec les attributs ou les caractéristiques d'une personne humaine. Le terme fonction désigne ici une opération exécutée par une machine.

Exemple de Hardware

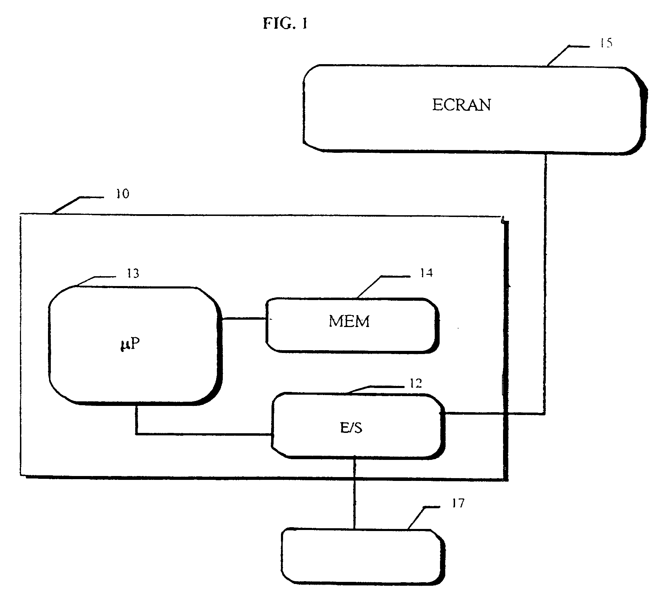

La FIG. 1 illustre un système de traitement de données tel que la présente invention le nécessite. Nous détaillons un calculateur ou ordinateur 10 qui comprend trois composants majeurs. Le premier est un circuit d'entrée-sortie (E/S) 12 qui est utilisé pour communiquer l'information sous une forme appropriée et structurée entre les différents composants de l'ordinateur 10. De plus le calculateur 10 comprend une unité de traitement 13 (par exemple un microprocesseur, μP) couplé au circuit d'entrée-sortie (E/S) 12 et une mémoire (MEM) 14. Ces éléments qui sont ceux qui se trouvent couramment dans les calculateurs standard sont censés êtres représentatifs d'une large catégorie de dispositifs de traitement de données. Nous représentons aussi un circuit d'interface 17 couplés au circuit E/S 12 pour coupler le calculateur 10 à un réseau, tel que la présente invention le nécessite. Un moniteur de visualisation 16 est aussi couplé au circuit E/S 12, dont l'affichage est produit par l'unité de traitement 13 (par exemple un μP) en accord avec la présente invention. Tous les types courants de tubes cathodiques ou autres types d'écrans peuvent être utilisés comme moniteur de visualisation 16. Il est à noter aussi que l'on pourra utiliser un écran déporté, celui d'une autre machine qui sera connecté à ce système de traitement de données par l'intermédiaire du réseau.

Un système autonome SA ou AS est un ensemble de routeurs ou de réseaux sous une administration unique. Le type de système autonome que l'on considère ici, est celui qui appartient aux fournisseurs ou aux opérateurs de télécommunications, parfois aux universités ou aux industriels. Ce type d'AS qui fournit un service de transit, est un réseau qui comprend un ensemble d'infrastructures destinées à effectuer le transport d'informations. Nous pouvons dire que le réseau Internet est formé par un ensemble de systèmes autonomes interconnectés. Ces systèmes vont se répartir le trafic de données sur Internet en appliquant des politiques de routage à la périphérie de leur réseau.

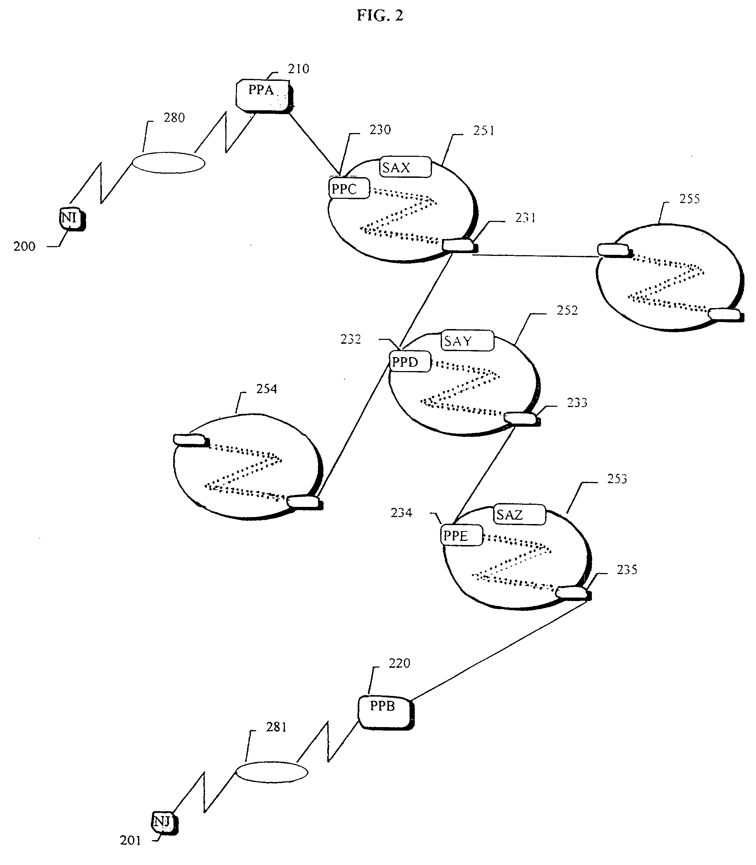

La FIG. 2 est un schéma simplifié qui illustre de manière conceptuelle une topologie d'un réseau Internet. Nous montrons un réseau « externe » (à Internet) 280 couplé par l'intermédiaire de la passerelle 210 (PPA) au réseau Internet. Un sous-ensemble du réseau Internet est représenté ici par le couplage de cinq systèmes autonomes 251 (SAX). 252 (SAY), 253 (SAZ), 254, 255. Les réseaux 254 et 255 ne sont là que pour montrer que chaque système autonome peut-être connecté à plusieurs autres systèmes autonomes. Un second réseau «externe» 281 est couplé au réseau Internet par 220 (PPB). Nous noterons que les deux réseaux externes 280 et 281 peuvent être soit:

- un réseau local privé fonctionnant avec le protocole IP comme sur Internet.
- un réseau public ou privé fonctionnant avec un autre protocole que IP comme X25, RNIS, etc..
- un réseau téléphonique commuté public (RTCP) ou privé.

Les trois systèmes autonomes explicitement nommés SAX ,SAY, SAZ permettent ensuite de matérialiser le chemin d'un paquet de données dans le réseau Internet. Il faut noter pourtant que la présente invention peut être utilisée dans des réseaux autres qu'Internet.

Un des aspects uniques du système Internet est que les messages et les données sont transmis par l'intermédiaire de paquets de données «datagrammes». Dans un réseau basé sur la transmission de datagrammes, les messages sont envoyés d'une source vers une destination de la même manière qu'une lettre est envoyée par la poste. Par exemple, un ordinateur source envoie un datagramme vers un ordinateur destination sans savoir s'il est connecté au réseau au moment de l'envoi du paquet. Le protocole IP est un protocole dit «en mode non connecté». Il n'existe aucune connexion ou chemin virtuel entre l'ordinateur source et l'ordinateur destination. Aucun datagramme IP n'est associé à un autre datagramme.

Dans cette spécification, la présente invention est décrite en se référant à des communications entre des noeuds, des passerelles ou noeud d'accès, et des routeurs. Par exemple le noeud 200 NI couplé au réseau 280 est couplé au réseau Internet par la passerelle 210 (PPA). Le noeud 201, couplé au réseau 281, lui est couplé au réseau Internet par le noeud d'accès 220 (PPB). Les noeuds NI, NJ, les passerelles PPA, PPB, etc. représentent des systèmes de traitements de l'information tels que celui illustré dans la FIG. 1, couplés à leurs réseaux respectifs. Par souci de simplification et de facilité de compréhension, une opération avec, par exemple, le noeud NI, ou la passerelle PPA, devra être comprise comme une opération avec l'ordinateur couplé au réseau 280. La présente invention peut être réalisée, soit dans le noeud lui-même, soit dans un appareil couplé au noeud et semblable lui aussi au système décrit dans la FIG. 1. Cet appareil peut être soit un ordinateur standard, soit un système conçu spécialement et optimisé pour exécuter les fonctions de la présente invention. Encore une fois par souci de compréhension. et par souci de simplification une opération avec un noeud du réseau devra être comprise comme une opération avec un noeud du réseau utilisant la présente invention soit en l'ayant implémentée dans le noeud lui-même, soit en couplant ce noeud avec un second noeud ou appareil comme celui décrit dans la FIG 1.

Considérons dans la FIG. 2, le chemin suivi par un paquet de données « datagramme » envoyé par un ordinateur 200 ou noeud NI du réseau vers un ordinateur 201 noeud NJ. Dans cette configuration, ce paquet va traverser trois systèmes autonomes SAX, SAY, SAZ.

Il faut noter que le chemin emprunté, et le nombre de systèmes autonomes traversés sont variables et ne dépendent ni de la distance physique entre les deux ordinateurs NI 200 et NJ 201, ni de leur localisation physique. Il sera fonction des accords commerciaux ou, et de coopération passés entre les différents opérateurs de télécommunication et administrateurs des systèmes autonomes privés ou public. Ces accords sont matérialisés par les configurations des passerelles ou noeuds d'accès à ces systèmes autonomes. Ces configurations sont réalisées pour des protocoles de routage tel que EGP, BGP-4 (Border Gateway protocol 4) etc.

Le chemin emprunté par ce datagramme sera l'arc 200, 210, 230, 231, 232, 233, 234, 235, 220, 201. La notion de noeud d'accès au réseau ou noeud de sortie d'un réseau est fonction du sens du paquet: la source est le noeud I, la destination est le noeud J. Bien entendue si le sens est inversé le noeud de sortie se transforme en noeud d'accès, et vice versa.

Le noeud 210 PPA sera le noeud d'accès au réseau Internet. C'est à dire l'ordinateur passerelle du fournisseur du service d'accès à Internet (Internet Service Provider).

L'ordinateur 230 (PPC) sera un noeud d'accès au système autonome 251 (SAX), l'ordinateur 231 sera le noeud de sortie de 251 (SAX).

L'ordinateur 232 (PPD) sera un noeud d'accès au système autonome 252 (SAY), l'ordinateur 233 sera le noeud de sortie de 252 (SAY).

L'ordinateur 234 (PPE) sera un noeud d'accès au système autonome 253 (SAZ), l'ordinateur 235 sera le noeud de sortie de 253 (SAZ).

Le noeud 220 (PPB) sera le noeud de sortie du réseau Internet pour un paquet envoyé par 200 (NI) vers 201 (NJ). Ce noeud 220 (PPB) sera la passerelle d'un fournisseur d'accès Internet et sera couplé au réseau 281.

La topologie du réseau décrite dans la FIG. 2 est représentative d'une topologie du réseau Internet, il est à noter que la présente invention peut être appliqué dans d'autres topologies de réseaux, ainsi que dans des réseaux autres qu'Internet, et en utilisant des protocoles autres que IP.

Considérons maintenant la notion de Jeton de péage introduite ici dans le contexte de la présente invention.

Un jeton de péage est une valeur numérique associé à un crédit d'unités de péage, c'est à dire une séquence de bits, ou une chaîne de n-bits (quand n est le nombre de bits de la chaîne) qui peut représenter. soit:

- une valeur qui peut être échangée contre de la monnaie réelle. (Exemple: franc, dollar, yen etc.)
- une valeur qui peut à un instant donné autoriser un système électronique à effectuer une opération.
- une valeur qui peut être enregistrée par un système électronique.
- une valeur qui peut être stockée par un système électronique.
- une valeur qui peut être modifiée par un système électronique en échange du déclenchement d'une opération physique ou électronique.

Un jeton de péage peut être:

- vendu contre de la monnaie réelle.
- échangé ou utilisé contre un service donné, ou une opération électronique ou physique.

Un jeton de péage consiste en des signaux physiques, électriques, magnétiques manipulable par un système électronique.

Afin de mieux décrire le fonctionnement de la présente invention nous introduisons deux types de valeurs pour faire référence à un jeton J: La valeur numérique VNJ, c'est à dire la valeur réelle du jeton, la valeur correspondant à sa représentation en signaux physiques ou électroniques, et la notion de valeur de compensation VCJ. La valeur de compensation du jeton est la valeur d'échange du jeton ou le crédit associé au jeton. Par exemple, la valeur de compensation monétaire sera donnée dans une unité de monnaie. Par exemple, 1000 jetons valent 1 franc. La valeur d'échange pour des opérations de transport d'un paquet correspond à un crédit de transport. Par exemple, un datagramme peut contenir un jeton dont le crédit de transport est fonction du nombre de noeuds du réseau qu'il peut traverser.

La valeur de compensation ou crédit du jeton pourra être fonction du nombre, du type et de la qualité des opérations potentielles que celui-ci pourra déclencher. Si T est le type d'opération, Q la qualité de service de l'opération, et N le nombre d'opérations, nous aurons alors $VCJ = V_{TQ}(N)$. Par exemple, l'opération électronique de type T déclenchée peut être l'autorisation de laisser passer un datagramme dans un noeud du réseau, et N le nombre maximum de noeuds que l'on peut traverser avec un jeton, Q peut être un niveau de priorité pour un datagramme.

Appelons dépense du jeton J, la modification de sa valeur numérique et donc de sa valeur de compensation associée, à la suite du déclenchement d'une opération quelconque.

Par exemple dans le cas de la traversée d'un noeud par un datagramme qui contient un jeton J:

si $VCJ_n = V_{TQ}(n)$ est la valeur de compensation du jeton J de valeur numérique $VNJ_n$ avant la traversée d'un noeud du réseau.

alors $VCJ_{n-1} = V_{TQ}(n-1)$ est sa valeur de compensation associée à la valeur numérique $VNJ_{n-1}$ après la traversée du noeud.

Dans la présente invention un jeton est inséré dans la structure de contrôle, c'est à dire dans l'en-tête d'un paquet d'information. Ce paquet va pouvoir financer lui-même divers types d'opérations comme le transport des données contenues dans ce paquet à travers les différents noeuds d'un réseau. Il peut aussi financer le cryptage et le décryptage des données contenues dans le paquet ou permettre l'exécution du code exécutable ou interprétable d'un programme ou d'une partie de programme contenue dans ce paquet. Le jeton contenu dans un paquet d'information peut financer tout type d'opération sur n'importe quel noeud du réseau dans lequel le paquet va résider, y compris les noeuds de départ et d'arrivée du paquet.

Avant de décrire les fonctions principales de la présente invention et les méthodes que la présente invention peut utiliser pour construire un jeton de péage J, différencions deux types de jeton : les jetons de péage de stockage JS et les jetons de péage volatiles JV.

Les premiers ont une valeur de compensation qui peut être valable durant un intervalle de temps limité. Cet intervalle peut aller de quelques heures à plusieurs années. Les seconds auront une valeur de compensation uniquement durant le transport du paquet qui ne peut en général excéder quelques secondes.

Deux fonctions principales de la présente invention concernent:

- La fonction créditrice à l'émission du paquet:

  récupération des valeurs nécessaires à la construction du jeton ;
  fabrication du jeton J suivant les valeurs de T, Q. N ou autres (calcul de VNJ) ;
  insertion du jeton de péage dans le datagramme à envoyer.

- La fonction débitrice à la réception du paquet:

  vérification du jeton, présence et authentification ;
  dépense du jeton de péage du paquet reçu. (modification de VNJ, la valeur numérique du jeton) ;
  suivant la nature du jeton (jeton de stockage ou jeton volatile) ;
  récupération ou transformation des jetons pour l'échange ou le remboursement ;
  crédit d'un compte pour le remboursement;
  déclenchement de l'opération électronique ou physique.

- La fonction neutre (ni débit ni crédit) :
  une fonction qui peut suivant certaines conditions laisser le jeton dans l'état sans le modifier, dans ce cas le jeton de péage consiste alors simplement en une valeur d'authentification qui autorise le déclenchement d'une opération électronique ou physique : par exemple la traversée des noeuds sans que le jeton soit débité.

Nous appellerons par la suite noeuds débiteurs ou créditeurs ou neutres, les noeuds du réseau qui exécuteront les fonctions créditrices ou débitrices de la présente invention. Il faut noter que chaque noeud peut être débiteur et créditeur au même moment pour des paquets différents et éventuellement pour les mêmes paquets.

Considérons maintenant le fonctionnement de la présente invention dans un but de financement du transport des données, dans la topologie décrite dans la FIG. 2.

Dans la FIG. 2, dans le cas d'un paquet qui va de NI vers NJ, le noeud créditeur est soit le noeud NI lui-même, soit le noeud PPA. Les noeuds PPC, PPD, PPE, PPB et enfin NJ peuvent être débiteurs. En général le noeud émetteur ou le noeud du fournisseur du service d'accès à Internet sont les noeuds qui peuvent être créditeurs, et ensuite tous les autres noeuds traversés peuvent être des noeuds débiteurs. Il peut y avoir ensuite plusieurs possibilités pour financer le transport des paquets qu'envoie le noeud NI. Il est possible d'acheter des jetons de stockage qui seront insérés dans les paquets envoyés par le noeud NI. Les valeurs seront choisies en fonction de l'adresse de destination du paquet dont le transport est financé. Une autre possibilité est d'insérer des jetons de stockage ou des jetons dynamiques au niveau du noeud PPA du fournisseur de service Internet.

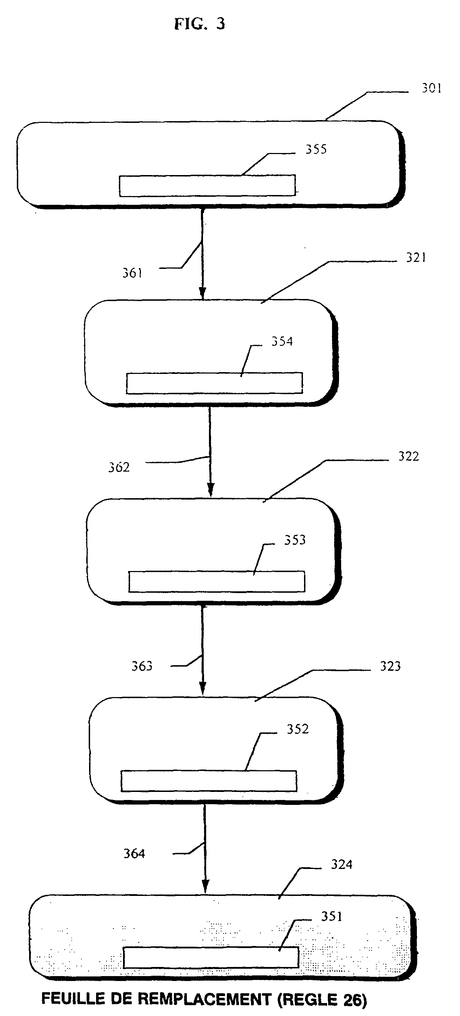

Dans la FIG 3. nous observons la variation de la valeur VCJ associée au paquet après les traversées des noeuds PPA 361. PPC 362, PPD 363, et PPB 364, 301, 321, 322, 323, 324 représentent le même paquet d'informations avec des valeurs VNJ 355, 354, 353, 352, 351 différentes.

Afin d'insérer un jeton de péage dans un paquet de données, il est nécessaire de définir une en-tête de péage afin de permettre le traitement des paqucts porteurs de jetons.

Cet en-tête doit précéder les données constituant les jetons, il pourra par exemple être constitué de plusieurs champs tels que la taille des données constituant le ou les jetons, un champ contenant un identifiant du créateur du jeton qui va permettre le traitement de la valeur numérique du jeton VNJ.

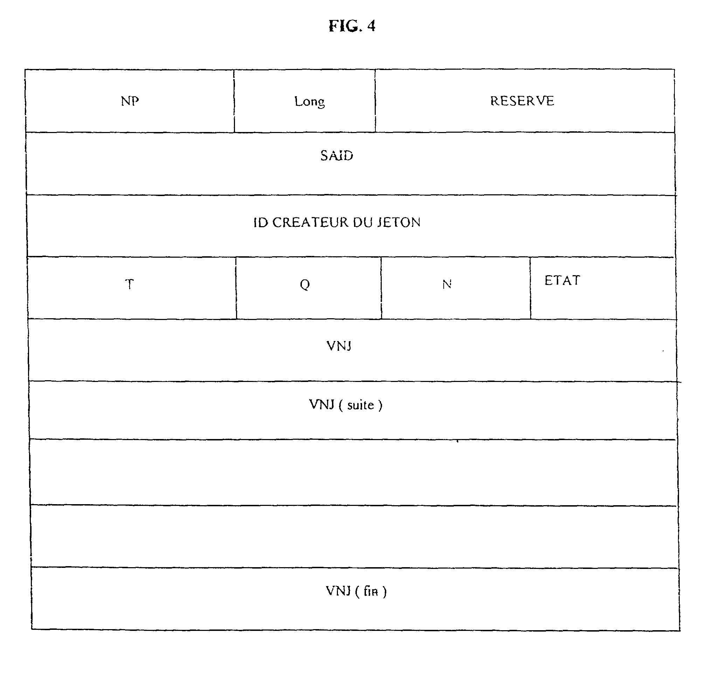

Sur la FIG. 4., il est donné un exemple d'entête de péage utilisable dans la présente invention. Une ligne peut correspondre comme dans l'en-tête IPv6 de sécurité à une séquence de 64 bits. Le champ ETAT peut donner un état particulier du jeton qui peut autoriser la traversée du noeud en utilisant la fonction neutre de la présente invention, c'est à dire ni débit, ni crédit simplement une valeur VNJ qui autorise la traversée du noeud.

Pour les paquets IPv4 circulant sur l'Internet cet en-tête et les données qui s'y rattachent peuvent être intégrés en utilisant le champ option des paquets IP. En définissant un nouveau type d'options non utilisé par exemple.

Pour IPv6 il est envisageable de proposer d'incorporer un en-tête de péage à l'IETF. Cet en-tête serait semblable pour certains champs à l'en-tête de sécurité de IPv6 ou IPng. Il est même possible d'utiliser l'en-tête de sécurité actuel.

Nous abordons maintenant la manière dont la présente invention va récupérer les données nécessaires à la construction du jeton. Pour faire fonctionner la présente invention, il n'est pas nécessaire d'utiliser un protocole complet permettant d'interroger les noeuds débiteurs ou créditeurs éventuels. La présente invention obtient le nombre de noeuds débiteurs et le type de débits qu'ils effectuent sur un jeton. Le noeud créditeur peut mettre à jour une table indiquant le nombre de noeuds débiteurs à traverser suivant l'adresse de destination. Cette table peut être du même type qu'une table de routage sur un routeur. Pour chaque adresse ou groupe d'adresses, nous pouvons associer le type d'opérations, la qualité de service et le nombre de noeuds à traverser. La partie créditrice de l'invention va donc, pour mettre à jour cette table, remplir le premier paquet à envoyer vers sa destination avec un jeton ayant une valeur de compensation maximum pour tous les types de services existant et un nombre de noeuds maximum.

Le dernier noeud débiteur doit renvoyer une erreur si un paquet arrive avec un jeton qui contient plus de crédit qu'il ne peut débiter. Exemple le jeton à la valeur numérique $VNJ_4$ (l'indice 4 représente le nombre de noeuds qui peut être traversé) ici, le noeud qui le reçoit le débite, et le jeton à une valeur $VNJ_3$. Le noeud débiteur dans ce cas retourne le jeton au dernier noeud créditeur émetteur du paquet. Il est sous-entendu ici qu'il peut exister plusieurs noeuds créditeurs sur le trajet d'un paquet IP par exemple. Sur le noeud créditeur émetteur, à la réception d'un paquet en erreur la table évoquée plus haut est mise à jour. Les paquets envoyés sont stockés pendant un temps assez court dans un cache permettant la vérification des paquets en erreur. Cette méthode très simple est bien évidemment sujette à amélioration. Elle est donnée ici pour montrer la faisabilité de la présente invention. Nous pouvons envisager par la suite un protocole d'interrogation des noeuds débiteurs par les noeuds créditeurs qui fonctionnerait sur les mêmes principes qu'un protocole de routage par exemple, ou bien. il est possible d'intégrer la constitution des tables évoquées plus haut, dans un protocole de routage.

Les paquets utilisés pour mettre à jour de telles tables peuvent être doté de jetons permettant le passage des noeuds sans débits ni crédit du jeton (jeton avec valeur numérique d'authentification). C'est une utilisation de la fonction neutre de la présente invention.

La présente invention peut aussi inclure dans l'en-tête de péage, des informations sur le routage du paquet puisque le chemin que va suivre le paquet peut dépendre du choix des noeuds débiteurs à traverser.

La valeur numérique VNJ et la provenance d'un jeton de péage J doivent être authentifiables et vérifiables. Cette valeur numérique peut être authentifiée par un mécanisme de signature numérique. Si D est une séquence de données numériques et D' la signature de D. Cette signature numérique peut être obtenue par diverses opérations parmi lesquelles :

- des opérations utilisant une clé privée ou secrète SK et une clé publique PK (comme par exemple pour RSA ou Diffie-Hellman), tel que D' = $S_{SK}(D)$, alors la vérification de D' s'effectue en vérifiant que $S_{PK}(D') = S_{PK}(S_{SK}(D)) = D$.
- une fonction de hashing $h_s$ secrète telle que, si D est une chaîne de n-bits et D' une chaîne de m-bits $h_s(D) = D'$. Seul le possesseur de la fonction $h_s$ peut produire et authentifier ces données. Cette méthode est moins fiable et induit le transport de manière crypté de la fonction $h_s$, mais elle est beaucoup plus rapide. L'exécution d'une fonction de hashing est environ 100 fois plus rapide que la vérification d'une signature RSA, et environ 10 000 fois plus rapide que la génération d'une signature RSA.

Nous abordons maintenant différentes méthodes de création d'un jeton J de valeur VNJ. Suivant les méthodes utilisées, la création, la dépense, la récupération, l'échange ou le remboursement des jetons sont plus ou moins rapides, mais aussi plus ou moins fiable et résistant en terme de cryptographie.

La méthode doit être adaptée au type de l'opération afin que le coût de la facturation ne dépasse pas le coût de l'opération elle-même. Par exemple dans le cas du transport de datagrammes IP la création systématique d'une signature de type RSA pour chaque paquet n'est pas envisageable actuellement. Il est préférable actuellement d'avoir un système basé sur une fonction du même type que $h_s$. Il est possible aussi d'acheter de la micro-monnaie à un courtier ou « broker » et de l'incorporer dans un jeton de péage.

Décrivons maintenant le système MicroMint qui est utilisé par la première méthode de construction de jetons. Cette méthode est décrite dans l'article intitulé "PayWord and MicroMint - Two Simple Micropayment Schemes" par R.L. RIVEST et A. SHAMIR et présenté le 26 janvier 1996 lors de la conférence RSA de 1996.

Ils montrent avec MicroMint qu'il est possible de fabriquer des « pièces de monnaie électroniques » de très faible valeur, à un coût très faible lorsque la quantité est très importante. Ces pièces peuvent être achetées ou revendues à un courtier « broker » qui les fabrique industriellement.. Ces « pièces électroniques» sont des chaînes de bits dont la validité peut être vérifiée par n'importe qui, mais qui sont difficiles à produire. Dans ce système, les pièces sont représentées par des collisions de fonction de hashing. Une k- collision ($x_1$, $x_2$,...$x_k$) représente une pièce électronique et il est possible de vérifier cette pièce en contrôlant que

$$h(x_1) = h(x_2) = .......... = h(x_k).$$

Dans leur publication qui décrit MicroMint les auteurs indiquent que pour une production de masse de ces pièces, chacune d'elle peut être constituée d'une séquence de 18 octets. Nous pouvons faire référence à une pièce MicroMint par M (valeur numérique de la chaîne d'octets) de valeur de compensation m (valeur par exemple en 1/1000 de francs) et de longueur l = 18 octets. Il est à noter que cette valeur de l est utilisé pour montrer la faisabilité de l'utilisation de MicroMint ou d'un autre système du même type dans la présente invention, l est fonction des paramètres de construction de M et peut donc changer. Ce système permet aussi de produire des pièces de valeur différente. Nous faisons référence aussi à une pièce I (valeur numérique de la chaîne d'octets) de valeur de compensation $10^*m$ (lire 10 multiplié par m). de longueur l' = 20 octets.

Une première manière de construire un jeton de péage J est de concaténer plusieurs séquences de valeur M. Par exemple si $VCJ_{TQ}=V_{TQ}(N)$, N étant le nombre de noeuds débiteurs à traverser. La valeur $VNJ_N$ de J sera $M_1M_2......M_N$ et le jeton sera de longueur $N^*18$ octets. Nous remarquons que dans ce cas le jeton est un jeton de stockage, car sa validité est celle des pièces MicroMint qui est d'un mois.

Il est possible éventuellement de compresser cette valeur et de la décompresser au moment de la dépense du jeton. Ici pour simplifier la description la compression n'est pas utilisée

Dans la présente invention, il est possible aussi de construire un jeton avec des pièces de différentes valeurs pour des qualités de services différentes et des types d'opérations différentes. Par exemple si $VCJ_{N2N1}$ $= V_{T1Q1,T2Q2}(N2N1)$ alors la valeur numérique $VNJ_{N1,N2}$ $= I_1I_2....I_{N2}M_1M_2......M_{N1}$. La valeur $VNJ_{N1,N2}$ sera un jeton de longueur $N2^*20+N1^*18$ octets . Nous considérons dans cet exemple que la qualité de service Q1 pour le type de service ou d'opération T1 est associée au transport d'un paquet d'information avec une priorité supérieure à la priorité de traitement d'un datagramme normal qui ne possède pas de jeton. Les paquets peuvent être traités dans un noeud de routage ou d'accès de manière prioritaire suivant leur qualité de service. Le type T2 est la qualité de service Q2 est associé à un type d'opération différente par exemple l'exécution de l'ensemble ou d'une partie d'un segment de code particulier sur le noeud débiteur.

Il serait possible de facturer par exemple l'exécution de code interprétable du langage Java contenu dans les paquets sur une machine qui incorpore la présente invention.

La partie débitrice de la présente invention pourrait permettre ou non, l'exécution du code seulement si chaque paquet contenant une partie du code est correctement crédité avec la valeur nécessaire.

Considérons la dépense d'un jeton lorsqu'il traverse un noeud débiteur quand l'indice n est le nombre de noeuds qui reste à traverser:

Si $VNJ_n = M_1M_2......M_n$ est la valeur numérique du jeton avant la traversée d'un noeud débiteur du réseau, et J est une chaîne de $n^*18$ octets,
　　alors $VNJ_{n-1} = M_1M_2....M_{n-1}$ et J est devenu une chaîne de (n-1) $^*$ 18 octets.

Si la présente invention utilise des pièces du même type que celles de MicroMint pour construire un jeton J, la présente invention va induire les modifications de VNJ suivantes durant le parcours de l'arc 200, 210, 230, 231, 232, 233, 234, 235, 220, 201 de la FIG 2.

Evoquons le cas ou c'est l'utilisateur lui-même qui construit les jetons. Dans ce cas le noeud NI 200 est le noeud créditeur et si N1 est le nombre de noeuds débiteurs pour le transport, dans ce cas N1 = 5.

Considérons pour l'exemple que c'est PPA le noeud d'accès qui est le noeud créditeur, que le noeud d'arrivée est un serveur qui fournit un service ou permet de déclencher une opération de type T2 et de qualité de service Q2 différente. Le noeud d'arrivée lui-même NJ 201 est alors aussi un noeud débiteur pour une qualité de service Q2 et un type T2. L'opération déclenchée dans ce cas n'est pas une opération permettant le transport de données : il est possible de facturer un accès à une base de données, ou l'exécution d'un programme ou d'un service quelconque.

Dans ce cas sur le noeud créditeur PPA, la présente invention évalue le coût affecté au transport du paquet et ensuite le coût du service distant. La présente invention détermine N1 = 4, et N2 = 1 alors la présente invention construit le jeton J sous la forme d'une chaîne de $1^*20 + 4^*18$ octets et de valeur $VNJ_{1,4} = I_1M_1M_2M_3M_4$

La partie créditrice de la présente invention construit ses jetons à partir de pièces Mi achetées à un courtier qui fabrique et stocke celles-ci en grande quantité.

Si $VNJ_{1,4}$ est la valeur du jeton dans le noeud créditeur PPA 230, alors après la traversée du premier noeud débiteur PPC, J vaudra $VNJ_{1,3} = I_1M_1M_2M_3$.

La partie débitrice de la présente invention dans le noeud PPC va d'abord vérifier la validité de $M_4$ avant de laisser passer le paquet. Cette vérification peut être effectuée de manière aléatoire ou probabiliste afin de diminuer la charge de la machine, (cette remarque est générale à la présente invention : toutes les vérifications de validité des données peuvent être faites de manière probabiliste ou aléatoire). La présente invention sur le noeud PPC va stocker la chaîne $M_4$, si elle est valide, afin de la renvoyer au courtier ou « broker » contre remboursement. Il faut noter que l'origine de la pièce et l'identification du courtier sont présentes dans l'en-tête de péage du paquet. La partie débitrice de la présente invention archive ses pièces en fonction de leur origine afin de faciliter leur échange par le courtier. Ces pièces peuvent être renvoyées au courtier pour remboursement chaque soir par exemple.

Ensuite, les différentes valeurs de VNJ seront :

$VNJ_{1,2} = I_1M_1M_2$ après la traversée du noeud PPD qui va archiver la pièce $M_3$.
$VNJ_{1,1} = I_1M_1$ après la traversée du noeud PPE qui va archiver la pièce $M_2$
$VNJ_{1,0} = I_1$ après la traversée du noeud PPB qui va

archiver la pièce $M_1$

La traversée du dernier noeud PPB qui est un noeud d'accès au réseau Internet pour NJ est dans ce cas aussi un noeud débiteur, car il donne accès au réseau 281 sur lequel est NJ.

C'est un moyen de facturer l'accès à des noeuds qui peuvent fournir des services particuliers de la même manière que les passerelles d'accès de France telecom pour le service Kiosque ou la facturation est la même pour accéder à un ensemble de serveurs.

Enfin, le dernier noeud débiteur sera NJ qui va facturer son service de type T2, il stocke la pièce $I_1$ afin de la renvoyer au courtier pour remboursement.

Abordons maintenant une seconde méthode pour construire le jeton J.

Considérons une fonction de hashing secrète H cette fonction doit être résistante dans le sens cryptographique du terme. ( c'est à dire qu'elle doit pouvoir résister à des attaques). Cette fonction peut être du même type qu'une fonction MD5 ou SHA. Le principe de H est que l'on l'applique sur un paquet ou une partie d'un paquet et qu'on dissémine dans le résultat de la fonction les valeurs T, Q, N associée à la valeur de compensation d'un jeton.

Il faut noter que dans la présente invention toutes les fonctions de hashing doivent s'appliquer sur les parties fixes de l'en-tête d'un paquet. Des valeurs comme TTL (Time To Live) par exemple sont sujettes à des modifications dans d'autres noeuds que les noeuds qui utilisent la présente invention.

Pour créer un Jeton nous utiliserons la fonction HC

$VNJ_{P,N} = HC_{T,Q}(P,N)$ P représentant une chaîne de m-bits associés au paquet IP lui-même ou à un sous-ensemble (bit de début et bit de fin secret). Le principe est de pouvoir vérifier la valeur $VNJ_n$ en calculant la valeur $VNJ_{n-1}$ avec une fonction $H_{T,Q}(P, VNJ_{P,n}) = VNJ_{P,n-1}$

L'implémentation de cette fonction dans un code machine (signée par exemple avec RSA) pourrait être téléchargée sur les noeuds débiteurs pour être exécutée par la partie débitrice de l'invention dans le cas du renouvellement de la fonction H.

Il faut noter que dans la présente invention, les systèmes électroniques qui constituent les noeuds créditeurs et surtout débiteurs doivent dans certains cas être mis sous scellés afin de préserver l'intégrité du système électronique. Il faut empêcher par exemple que le système soit modifié afin d'altérer le fonctionnement normale de la présente invention et permette une utilisation frauduleuse ( débiter les jetons d'une valeur supérieurs à celle prévue et autorisé). Pour éviter ce type et d'autres types de fraudes, des systèmes de contrôle de l'intégrité des jetons peuvent être mise en place sur tous les noeuds, afin de vérifier que chaque noeud fonctionne normalement.

La partie débitrice de la présente invention peut alors lorsqu'elle accepte un paquet $P_i$, et qu'elle dépense le jeton $J_i$ de valeur $VNJ_n$, incrémenter un compte $C_{id}$ de la valeur $VCJ_n$-$VCJ_{n-1}$.

id est un indice qui correspond à l'identifiant de l'utilisateur ou de l'organisme utilisateur de la partie créditrice, créatrice de jeton de la présente invention. Cette valeur correspond au champ ID CREATEUR DU JETON dans la FIG 4. Le compte $C_{id}$ est associé au créateur ou au fournisseur du jeton, sa valeur(à la fin de la journée par exemple) peut être remboursée par un courtier ou par l'utilisateur de la partie créditrice de l'invention qui a créé les jetons. La valeur $VC_{id}$ représente la somme de toutes les dépenses effectuées sur le noeud pour un noeud créditeur ou un ensemble de noeuds créditeurs. L'identification d'un noeud créditeur peut être associée à un seul noeud pour un utilisateur ou à un ensemble de noeuds pour une organisation. Les utilisateurs et les organisations qui utilisent le noeud créditeur de la présente invention, s'engagent donc à payer le débit constaté qui résulte du passage de leurs paquets sur les différents noeuds débiteurs, aux utilisateurs de la partie débitrice de la présente invention. Une clé public PK va permettre de vérifier la valeur du débit $VC_{id}$ en contrôlant que $S_{PK}(VA_{id}) = VC_{id}$.

Pour que cette valeur $VC_{id}$ soit authentifiable c'est la partie débitrice de la présente invention qui va signer cette $VC_{id}$ avec une clé secrète SK. La signature de VCid est donc $VA_{id} = S_{SK}(VCid)$.

Pour réaliser une autre méthode de création des jetons, nous introduisons maintenant la valeur de support intermédiaire, VSJ nécessaire à la création de la valeur numérique finale VNJ du jeton J. Cette valeur va jouer le rôle de contenant des informations du jeton, c'est VSJ qui va permettre d'authentifier le crédit de transport qui est associé au jeton.

La valeur de support VSJ du jeton de péage peut être obtenue en signant numériquement une autre valeur numérique VNU dont l'unicité doit être assurée. Si S est une fonction de signature numérique, nous avons $VSJ = S_{SK}(VNU)$.

VNU peut être soit:

- $VNU_S$, un numéro de série qu'on stocke par ailleurs pour vérifier son unicité.
- $VNU_D$, une valeur obtenue en appliquant une fonction Fh (dite fonction de hashing) sur une séquence de données numériques D (par exemple: un datagramme IP ou une partie de ce datagrame)

La fonction Fh doit avoir la propriété de générer une valeur VNU unique, pour chaque séquence D. telle que si D et D' sont des séquences numériques alors, la propriété $D \neq D' \Rightarrow Fh(D) \neq Fh(D')$ est vraie. La valeur obtenue dans ce cas est appelée « message digest » ou « fingerprint » (traduction littérale en français, respectivement message condensé et empreinte digitale).

La signature numérique de cette valeur peut être réalisée à l'aide de méthodes de cryptage et d'authentification. tel que DES, RSA, NIST etc., et avec des fonctions de hashing tel que MD2, MD4, MD5 etc..

Pour décrire la présente invention choisissons RSA qui utilise une méthode à base de clés publique et privée. Cette méthode, outre son efficacité, permet de décrementer plus facilement la valeur du crédit de transport affectée aux jetons. Néanmoins, la méthode RSA n'est pas liée à la présente invention et il est possible de choisir une autre méthode pour réaliser la présente invention.

Dans la présente invention, il est possible de faire la distinction entre les deux types de jetons de péage, les jetons de péage de stockage JS et les jetons de péage volatile JV. Dans ce cas appelons jetons de stockage JS, les jetons dont la valeur numérique support $VSJ_s$ est la signature d'un numéro de série, $VSJ_s = S(VNU_s)$. Dans ce cas, nous pouvons appeler jetons volatiles, les jetons dont la valeur numérique support $VSJ_D$ est la signature du « fingerprint » d'une séquence de données $VSJ_D = S(VNU_D)$.

La composition de la valeur numérique finale VNJ peut donc être fonction par exemple du type, de la qualité Q, et du nombre N des opérations que ce jeton J doit déclencher, $VNJ_N = Vn(VSJ,N,Q)$.

Si nous considérons par exemple, les nombres premiers 3, 5, 7, 11, 13, 17, etc. nous pouvons affecter chacun de ces nombres à une qualité de service différente Q. Si N est le nombre d'opérations potentielles, nous pouvons constituer des jetons de péage de stockage ou volatile dont la valeur sera fonction des valeurs de N et Q. Avec par exemple, $VNJ_N = VSJ^{1\,(Q^N)}$, si Q = 5 et N = 6 nous aurons $VNJ_6 = VSJ^{1/(5/6)}$. Cette égalité se lit: la valeur numérique $VNJ_6$ est égale à la valeur numérique VSJ élevée à la puissance de l'inverse de, 5 élevé à la puissance de 6. Il est possible d'avoir aussi un jeton tel que sa valeur numérique

$$VNJ_{2,3} = VSJ^{1/(3/2 \times 7/3)} = VNJ_{N1,N2} = VSJ^{1/(Q1/N1 \times Q2/N2)}.$$ Ce jeton va permettre d'effectuer deux opérations avec la qualité de service trois, et trois opérations avec la qualité de service sept.

Si nous composons la valeur VNJ comme précédemment. la dépense du jeton due à l'exécution d'une opération électronique va s'effectuer en élevant le jeton à la puissance associée à la qualité de service de l'opération. Par exemple, si le jeton $VNJ_{2,3} = VSJ^{1/(3/2 \times 7/3)}$ effectue une opération de qualité de service 7,

il vaudra donc $VNJ_{2,2} = VSJ^{7/(3/2 \times 7/3)} = VSJ^{1/(3/2 \times 7/2)}$ après avoir autorisé le déclenchement de cette opération.

Seule la notion de dépense du jeton est directement liée à la présente invention, il est possible d'utiliser d'autres mécanismes, ou d'autres méthodes pour réaliser cette dépense. La méthode choisie ici permet simplement de décrire un autre moyen qui permet de réaliser et décrire le fonctionnement de la présente invention.

Il est possible d'utiliser la présente invention dans une topologie de réseau différente de celle donnée dans la FIG 2.,

par exemple avec l'utilisation d'un noeud mobile raccordé au réseau, ou bien en utilisant le protocole DHCP qui affecte une adresse IP dynamique, ou bien encore lorsqu'on encapsule le protocole IP dans un protocole tel que SLIP, PPP, X25, ATM ou même encore dans IP (tunneling IP).

Ces différences n'ont aucune conséquence sur le fonctionnement de la présente invention. Il existe cependant des cas ou le fonctionnement de la présente invention peut être perturbé : dans le cas d'une fragmentation des paquets par exemple. Pour éviter que ceux-ci dépensent leur jeton, il faut interdire à la partie débitrice de l'invention la dépense d'un jeton dans un paquet fragmenté. Il est facile de vérifier qu'un paquet est un fragment ou non quel que soit le protocole utilisé. D'autre part la fragmentation est très limitée (sinon pratiquement interdite sur les parties WAN des réseau) dans la nouvelle version du protocole IP, IPv6. D'autre part si la présente invention utilise des pièces de type MicroMint dont la valeur n'est pas fonction de la valeur du paquet. Une tentative de remboursement de la copie d'une pièce déjà reçue par le broker doit échouer (d'après la description des auteurs de MicroMint). Dans un autre cas si nous construisons les jetons à partir d'une fonction de hashing appliquée sur le paquet, il est facile de vérifier si le paquet à été modifié sans que le jeton l'ait été, et notamment en examinant les champs de l'en-tête du paquet concerné par la fragmentation.

Il peut être rajouté des fonctions de contrôle à la présente invention permettant d'empêcher des paquets de traverser plusieurs fois le même noeud. La présente invention peut conserver dans des tables «cache» certaines informations propres aux paquets ou aux jetons ayant déjà traversés le noeud. La présente invention peut comparer les informations du paquet ou du jeton qui est traité avec celles qu'elle a mise dans son cache. Ces opérations peuvent être effectués de manière probabiliste.

La présente invention à été décrite en faisant référence à quelques exemples. Ces exemples ne sont pas restrictifs quant aux variations et aux différentes manières de réaliser la présente invention. Il est évident qu'il peut être effectué des modifications et des améliorations sans changer l'esprit et l'essentiel du contenu de la présente invention.

La présente invention permet principalement la taxation du transport des données sur un réseau de transmission de données et en particulier sur un réseau de type coopératif sans administration centralisée, réseau du même type que celui d'Internet. La présente invention peut aussi constituer un moyen de paiement électronique associé au contenu des paquets dans les noeuds d'un réseau de transmissions de données.

Le système selon l'invention permet à chaque paquet de données véhiculées par le réseau d'acquitter lui-même le coût de son transport.

Chaque paquet contient, en plus des informations nécessaires à son contrôle par le réseau, une information supplémentaire correspondant à un crédit d'unités de péage. Une partie de ce crédit est prélevée à chaque étape de l'acheminement du paquet à son point de destination. Durant tout le parcours du paquet, chaque opérateur de télécommunication privé ou public intervenant dans le transport du paquet peut prélever une partie de ce crédit. L'opérateur est donc payé directement pour le service fourni en effectuant le transport de ces informations.

Ce paquet va pouvoir financer lui-même divers types d'opérations autres que le transport. Il peut aussi financer le cryptage et le décryptage des données contenues dans le paquet ou permettre l'exécution du code exécutable ou interprétable d'un programme ou d'une partie de programme contenue dans ce paquet. Le jeton contenu dans un paquet d'information peut financer tout type d'opérations ou de service sur n'importe quel noeud du réseau dans lequel le paquet va résider, y compris les noeuds de départ et d'arrivée du paquet.

L'invention qui vient d'être décrite en relation avec les figures 1 à 4 montrent qu'elle concerne plus particulièrement un procédé pour déterminer les éléments de facturation du coût, à au moins un organisme de centralisation monétaire, des opérations effectuées par un réseau de transmission de données par paquet, le réseau comprenant une pluralité de noeuds de communication réalisant les opérations par l'intermédiaire d'un ou plusieurs opérateurs et desservant une pluralité d'utilisateurs, caractérisé en ce qu'il comprend les étapes principales suivantes consistant à :

(a) - affecter à chaque paquet de données à transmettre par un utilisateur du réseau une première valeur représentative d'un crédit d'unités monétaires dites de péage, ainsi que l'identité de l'organisme de centralisation monétaire fournisseur du crédit, le montant du crédit correspondant au coût des opérations à effectuer sur le paquet de données dans le réseau de transmission de données via au moins un noeud de communication;

(b) - mémoriser la première valeur représentative ainsi que l'identité de l'organisme de centralisation monétaire concerné;

(c) - diminuer, dans au moins le noeud de communication, la première valeur représentative d'un montant représentatif du coût des opérations à effectuer sur le paquet de données dans le noeud concerné ;

(d) - mémoriser le montant représentatif de la diminution de la valeur représentative ainsi que l'identité de l'organisme de centralisation monétaire ;

(e) - additionner, pour chaque utilisateur et chaque organisme de centralisation monétaire, les premières valeurs représentatives mémorisées pour obtenir un premier montant total dû par l'utilisateur concerné aux différents opérateurs du réseau via l'organisme de centralisation monétaire, et;

(f) - additionner, pour chaque opérateur et chaque organisme de centralisation monétaire, les montants représentatifs mémorisés pour obtenir un deuxième montant total dû à l'opérateur concerné par les différents utilisateurs du réseau via l'organisme de centralisation monétaire.

Le procédé est aussi caractérisé en ce que l'utilisateur du réseau achète à l'organisme de centralisation monétaire au moins un jeton de péage représentatif d'unités monétaires et en ce que la première valeur représentative est débitée sur le jeton de péage acheté par l'utilisateur.

L'opération (c) consiste en outre à:

- effectuer les opérations sur le paquet de données si le montant représentatif est égal ou inférieur à la valeur représentative,
- ne pas effectuer les opérations sur le paquet de données si le montant représentatif est supérieur à la valeur représentative.

Au moins la valeur représentative du crédit d'unités monétaires et le montant représentatif de la diminution de la valeur représentative sont des nombres numériques qui résultent de l'application de fonctions d'authentification à la valeur représentative et au montant représentatif

La fonction d'authentification peut être appliquée au contenu du paquet de données et/ou à l'identité de l'organisme de centralisation monétaire.

Les fonctions d'authentification sont du type signature numérique, des procédés mettant en oeuvre des fonctions de hashing, ou des procédés de cryptographie.

Une fonction de non-duplication peut être appliquée à la valeur représentative du crédit d'unités monétaires de manière à empêcher d'utiliser plus d'une fois la valeur représentative.

L'étape (a) comprend les étapes intermédiaires suivantes consistant à :

(a1) - calculer la valeur représentative en fonction du coût des opérations qui seront effectuées dans le réseau de transmission de données sur le paquet de données ;

(a2) - calculer le nombre numérique en mettant en oeuvre la fonction d'authentification, et

(a3) - introduire le nombre numérique dans le paquet de données à transmettre.

Dans l'étape intermédiaire (a1), le calcul est fonction des adresses de départ et d'arrivée du paquet de données. du nombre de noeuds de communication à traverser par le paquet de données, des types d'opérations que les noeuds de communication effectueront et des qualités des opérations effectuées.

L'étape intermédiaire (a3) consiste à:

- créer dans chaque paquet de données un "en-tête de péage", et
- paramétrer cet "en-tête de péage" pour y introduire le nombre numérique.

Une partie de l'en-tête de péage peut être utilisée pour transmettre à l'opérateur des informations lui permettant de traiter le contenu de l'en-tête de péage.

L'authentification des valeurs représentatives, des montants représentatifs et des identités des organismes de centralisation monétaire est effectuée de manière aléatoire ou probabiliste.

L'utilisateur du réseau est un fournisseur d'accès au réseau pour d'autres utilisateurs et le fournisseur d'accès réalise les fonctions d'un opérateur vis-à-vis des autres utilisateurs.

L'invention concerne, non seulement le procédé décrit ci-dessus, mais aussi un système de traitement de données pour mettre en oeuvre le procédé.

Ce système de traitement de données peut être individualisé au niveau de chaque noeud du réseau et de chaque utilisateur ou peut être intégré au système informatique de gestion de chaque noeud du réseau de transmission de données.

**Revendications**

1. Procédé pour déterminer les éléments de facturation du coût, à au moins un organisme de centralisation monétaire, des opérations effectuées par un réseau de transmission de données par paquet, ledit réseau comprenant une pluralité de noeuds de communication réalisant lesdites opérations par l'intermédiaire d'un ou plusieurs opérateurs et desservant me pluralité d'utilisateurs. caractérisé en ce qu'il comprend les étapes principales suivantes consistant à:

   (a) - affecter à chaque paquet de données à transmettre par un utilisateur du réseau une première valeur représentative d'un crédit d'unités monétaires dites de péage. ainsi que l'identité de l'organisme de centralisation

   monétaire fournisseur du crédit, le montant du crédit correspondant au coût des opérations à effectuer sur le paquet de données dans le réseau de transmission de données via au moins un noeud de communication;
   (b) - mémoriser ladite première valeur représentative ainsi que l'identité de l'organisme de centralisation monétaire concerné ;
   (c) - diminuer, dans au moins ledit noeud de communication, ladite première valeur représentative d'un montant représentatif du coût des opérations à effectuer sur le paquet de données dans le noeud concerné ;

(d) - mémoriser ledit montant représentatif de la diminution de la valeur représentative ainsi que l'identité de l'organisme de centralisation monétaire ;

(e) - additionner, pour chaque utilisateur et chaque organisme de centralisation monétaire, lesdites premières valeurs représentatives mémorisées pour obtenir un premier montant total dû par l'utilisateur concerné aux différents opérateurs du réseau via l'organisme de centralisation monétaire, et;

(f) - additionner, pour chaque opérateur et chaque organisme de centralisation monétaire, les montants représentatifs mémorisés pour obtenir un deuxième montant total dû à l'opérateur concerné par les différents utilisateurs du réseau via l'organisme de centralisation monétaire.

2. Procédé selon la revendication 1, caractérisé en ce que l'utilisateur du réseau achète à l'organisme de centralisation monétaire au moins un jeton de péage représentatif d'unités monétaires et en ce que ladite première valeur représentative est débitée sur le jeton de péage acheté par l'utilisateur.

3. Procédé selon la revendication 1 ou 2, caractérisé en ce que l'opération (c) consiste en outre à :

- effectuer les opérations sur le paquet de données si le montant représentatif est égal ou inférieur à la valeur représentative,
- ne pas effectuer les opérations sur le paquet de données si le montant représentatif est supérieur à la valeur représentative.

4. Procédé selon la revendication 1, 2 ou 3, caractérisé en ce qu'au moins ladite valeur représentative du crédit d'unités monétaires et ledit montant représentatif de la diminution de ladite valeur représentative sont des nombres numériques qui résultent de l'application de fonctions d'authentification à ladite valeur représentative et audit montant représentatif.

5. Procédé selon la revendication 4, caractérisé en ce que la fonction d'authentification est appliquée à l'identité de l'organisme de centralisation monétaire.

6. Procédé selon la revendication 4 ou 5, caractérisé en ce que la fonction d'authentification est appliquée au contenu du paquet de données.

7. Procédé selon la revendication 4, 5 ou 6, caractérisé en ce que les fonctions d'authentification sont du type signature numérique.

8. Procédé selon la revendication 4, 5 ou 6, caractérisé en ce que les fonctions d'authentification sont des procédés mettant en oeuvre des fonctions de hashing.

9. Procédé selon la revendication 4, 5 ou 6, caractérisé en ce que les fonctions d'authentification sont des procédés de cryptographie.

10. Procédé selon l'une des revendications précédentes 4 à 9, caractérisé en ce qu'une fonction de non-duplication est appliquée à ladite valeur représentative du crédit d'unités monétaires de manière à empêcher d'utiliser plus d'une fois ladite valeur représentative.

11. Procédé selon l'une des revendications 4 à 10, caractérisé en ce que l'étape (a) comprend les étapes intermédiaires suivantes consistant à :

(a1) - calculer ladite valeur représentative en fonction du coût des opérations qui seront effectuées dans le réseau de transmission de données sur le paquet de données ;

(a2) - calculer ledit nombre numérique en mettant en oeuvre la fonction d'authentification, et

(a3) - introduire ledit nombre numérique dans le paquet de données à transmettre.

12. Procédé selon la revendication 11, caractérisé en ce que, dans l'étape intermédiaire (a1), le calcul est fonction des adresses de départ et d'arrivée du paquet de données, du nombre de noeuds de communication à traverser par le paquet de données, des types d'opérations que lesdits noeuds de communication effectueront et des qualités des opérations effectuées.

13. Procédé selon l'une des revendications 11 ou 12, caractérisé en ce que l'étape intermédiaire (a3) consiste à :

- créer dans chaque paquet de données un "entête de péage", et
- paramétrer cet "en-tête de péage" pour y introduire ledit nombre numérique.

14. Procédé selon la revendication 13, caractérisé en ce qu'une partie de l'en-tête de péage est utilisée pour transmettre à l'opérateur des informations lui permettant de traiter le contenu de l'en-tête de péage.

15. Procédé selon l'une quelconque des revendications précédentes 4 à 14, caractérisé en ce que l'authentification des valeurs représentatives, des montants représentatifs et des identités des organismes de centralisation monétaire est effectuée de manière aléatoire ou probabiliste.

16. Procédé selon l'une quelconque des revendications l à 15 précédentes, caractérisé en ce que l'utilisateur du réseau est un fournisseur d'accès au réseau pour d'autres utilisateurs et en ce que ledit fournisseur d'accès réalise les fonctions d'un opérateur vis-à-vis desdits autres utilisateurs.

**Patentansprüche**

1. Verfahren zum Erfassen der Elemente einer Kostenberechnung, bei wenigstens einem zentralen Geldorgan, für Operationen, die über ein Datenpaket - Übertragungsnetz ausgeführt wurden, wobei das Netz mehrere Kommunikationsknoten aufweist, welche die Operationen mittels eines oder mehrerer Betreiber realisieren und mehrere Benutzer bedienen, gekennzeichnet durch die folgenden Hauptschritte:

   a) Zuordnen eines ersten Wertes zu jedem durch den Benutzer des Netzes zu übertragenden Datenpaket, wobei dieser erste Wert eine Guthaben in Geldeinheiten, das Gebühr genannt wird, repräsentiert, sowie der Identität des zentralen Geldorgans, welche das Guthaben bereitstellt, wobei der Betrag des Guthabens den Betriebskosten zum Realisieren des Datenpakets in dem Datenübertragungsnetz über wenigstens einen Kommunikationsknoten entspricht;
   b) Speichern dieses ersten repräsentativen Wertes sowie der Identität des betroffenen zentralen Geldorgans;
   c) Verringern dieses ersten repräsentativen Wertes in wenigstens diesem Kommunikationsknoten um einen Betrag, der repräsentativ für die Betriebskosten zum Realisieren des Datenpakets in dem betroffenen Knoten ist;
   d) Speichern des repräsentativen Verringerunsbetrags des repräsentativen Wertes sowie der Identität des zentralen Geldorgans;
   e) Addieren der gespeicherten repräsentativen ersten Werte für jeden Benutzer und jedes zentrale Geldorgan, um einen ersten Gesamtbetrag zu erhalten, der von dem betroffenen Benutzer an verschiedene Betreiber des Netzes über das zentrale Geldorgan geschuldet wird; und
   f) Addieren der gespeicherten repräsentativen Beträge für jeden Betreiber und jedes zentrale Geldorgan, um einen zweiten Gesamtbetrag zu erhalten, der von den verschiedenen Benutzern des Netzes über das zentrale Geldorgan dem betroffenen Betreiber geschuldet werden.

2. Verfahren nach Anspruch 1, dadurch **gekennzeichnet**, daß der Benutzer des Netzes von dem zentralen Geldorgan wenigstens einen Gebührenjeton kauft, der repräsentativ für Geldeinheiten ist, und daß dieser erste repräsentative Wert auf dem von dem Benutzer gekauften Gebührenjeton zugeteilt wird.

3. Verfahren nach Anspruch 1 oder 2, dadurch **gekennzeichnet**, daß der Schritt c) unter anderem darin besteht:

   daß die Operationen mit dem Datenpaket ausgeführt werden, wenn der repräsentative Betrag gleich oder geringer als der repräsentative Wert ist,
   die Operationen mit dem Datenpaket nicht ausgeführt werden, wenn der repräsentative Betrag größer als der repräsentative Wert ist.

4. Verfahren nach Anspruch 1, 2 oder 3, dadurch **gekennzeichnet**, daß wenigstens der repräsentative Wert des Geldeinheiten-Guthabens und der repräsentative Betrag der Verringerung dieses repräsentativen Wertes numerische Zahlen sind, die sich aus der Anwendung von Authentisierungsfunktionen dieses repräsentativen Wertes und dieses repräsentativen Betrags ergeben.

5. Verfahren nach Anspruch 4, dadurch **gekennzeichnet**, daß die Authentisierungsfunktion auf die Identität des zentralen Geldorgans angewendet wird.

6. Verfahren nach Anspruch 4 oder 5, dadurch **gekennzeichnet**, daß die Authentisierungsfunktion auf den Inhalt des Datenpakets angewendet wird.

7. Verfahren nach Anspruch 4, 5 oder 6, dadurch **gekennzeichnet**, daß die Authentisierungsfunktionen numerische Signatur-Funktionen sind.

8. Verfahren nach Anspruch 4, 5 oder 6, dadurch **gekennzeichnet**, daß die Authentisierungsfunktionen Verfahren sind, welche Hash-Funktionen verwenden.

9. Verfahren nach Anspruch 4, 5 oder 6, dadurch **gekennzeichnet**, daß die Authentisierungsfunktionen kryptographische Prozesse sind.

10. Verfahren nach einem der vorangehenden Ansprüche 4 bis 9, dadurch **gekennzeichnet**, daß eine nicht-Verdoppelungs-Funktion auf den repräsentativen Wert des Geldeinheiten-Guthabens derart angewendet wird, daß die Verwendung dieses repräsentativen Wertes, mehr als einmal, verhindert wird.

**11.** Verfahren nach einem der Ansprüche 4 bis 10, dadurch **gekennzeichnet**, daß der Schritt a) die folgenden Zwischenschritte umfaßt:

a1) Berechnen des repräsentativen Wertes als Funktion der Betriebskosten, die in dem Datenübertragungsnetz für das Datenpaket anfallen;
a2) Berechnen der numerischen Zahl durch Anwenden der Authentisierungsfunktion; und
a3) Einfügen dieser numerischen Zahl in das zu übertragende Datenpaket.

**12.** Verfahren nach Anspruch 11, dadurch **gekennzeichnet**, daß in dem Zwischenschritt al) die Berechnung eine Funktion der Start- und Zieladressen des Datenpakets, der Anzahl der Übertragungsknoten, welche von dem Datenpaket durchlaufen werden, der Art der Operationen, welche die Übertragungsknoten ausführen, und der Qualität der ausgeführten Operationen ist.

**13.** Verfahren nach einem der Ansprüche 11 oder 12, dadurch **gekennzeichnet**, daß der Zwischenschritt a3) darin besteht

in jedem Datenpaket einen "Gebührenkopf" zu erzeugen und
diesen "Gebührenkopf" zu parametrisieren, um darin die numerische Zahl einzufügen.

**14.** Verfahren nach Anspruch 13, dadurch **gekennzeichnet**, daß ein Teil des Gebührenkopfes dazu verwendet wird, an den Betreiber Informationen zu übertragen, welche diesem erlauben, den Inhalt des Gebührenkopfes zu verarbeiten.

**15.** Verfahren nach einem der Ansprüche 4 bis 14, dadurch **gekennzeichnet**, daß die Authentisierung der repräsentativen Werte, repräsentativen Beträge und Identitäten des zentralen Geldorgans auf Zufalls- und Wahrscheinlichkeitsbasis ausgeführt wird.

**16.** Verfahren nach einem der vorangehenden Ansprüche 1 bis 15, dadurch **gekennzeichnet**, daß der Benutzer des Netzes anderen Benutzern Zugang zu dem Netz bietet und daß dieser Zugang bietende Benutzer im Verhältnis zu den anderen Benutzern die Funktionen eines Betreibers realisiert.

**Claims**

**1.** Process for determining the elements of charging for the cost, to at least one financial centralisation body, of the operations performed by a network for transmission of data in packets, the said network comprising a plurality of communication nodes performing the said operations by means of one or more operators and serving a plurality of users, characterised by the fact that it comprises the following main steps consisting of:

(a) - assigning to each packet of data to be transmitted by a user of the network a first representative value of a credit of monetary units called charge units, and the identity of the financial centralisation body providing the credit, the credit sum corresponding to the cost of the operations to be performed on the data packet in the network for transmission of data via at least one communication node;

(b) - storing the said first representative value and the identity of the financial centralisation body in question;

(c) - decreasing, in at least the said communication node, the said first representative value by a sum representative of the cost of the operations to be performed on the packet of data in the node in question;

(d) - storing the said representative sum of the decrease in the representative value and the identity of the financial centralisation body;

(e) - adding, for each user and each financial centralisation body, the said stored first representative values to obtain a first total sum due by the user in question to the different operators of the network via the financial centralisation body, and;

(f) - adding, for each operator and each financial centralisation body, the stored representative sums to obtain a second total sum due to the operator in question by the different users of the network via the financial centralisation body.

**2.** Process as described in claim 1, characterised by the fact that the user of the network purchases from the financial centralisation body at least one charge token representative of monetary units and by the fact that the said first representative value is debited on the charge token purchased by the user.

**3.** Process as described in claim 1 or 2, characterised by the fact that operation (c) also consists of:

- performing the operations on the packet of data if the representative sum is equal to or less than the representative value,

- not performing the operations on the packet of data if the representative sum is greater than the representative value.

4.  Process as described in claim 1, 2, or 3, characterised by the fact that at least the said representative value of the credit of monetary units and the said representative sum of the decrease in the said representative value are digital numbers which result from the application of authentication functions to the said representative value and to the said representative sum.

5.  Process as described in claim 4, characterised by the fact that the authentication function is applied to the identity of the financial centralisation body.

6.  Process as described in claim 4 or 5, characterised by the fact that the authentication function is applied to the contents of the packet of data.

7.  Process as described in claim 4, 5, or 6, characterised by the fact that the authentication functions are of the digital signature type.

8.  Process as described in claim 4, 5, or 6, characterised by the fact that the authentication functions are processes employing hashing functions.

9.  Process as described in claim 4, 5, or 6, characterised by the fact that the authentication functions are cryptography processes.

10. Process as described in one of the preceding claims 4 to 9, characterised by the fact that a non-duplication function is applied to the said representative value of the credit of monetary units so as to prevent the use of the said representative value more than once.

11. Process as described in one of claims 4 to 10, characterised by the fact that step (a) comprises the following intermediate steps consisting of:

    (a1) - calculating the said representative value as a function of the cost of the operations which will be performed in the data transmission network on the packet of data;

    (a2) - calculating the said digital number by employing the authentication function, and

    (a3) - introducing the said digital number into the packet of data to be transmitted.

12. Process as described in claim 11, characterised by the fact that, in the intermediate step (a1), the calculation is a function of the sending and receiving addresses of the packet of data, of the number of communication nodes to be passed through by the packet of data, of the types of operation that the said communication nodes will perform and of the qualities of the operations performed.

13. Process as described in one of claims 11 or 12, characterised by the fact that the intermediate step (a3) consists of:

    -   creating a "charge header" in each packet of data, and

    -   configuring this "charge header" to introduce the said digital number into it.

14. Process as described in claim 13, characterised by the fact that a part of the charge header is used to transmit to the operator data which will allow him to process the contents of the charge header.

15. Process as described in any one of the preceding claims 4 to 14, characterised by the fact that the authentication of the representative values, of the representative sums and of the identities of the financial centralisation bodies is effected in random or probabilistic manner.

16. Process as described in any one of the preceding claims 1 to 15, characterised by the fact that the user of the network is a supplier of access to the network for other users and by the fact that the said access supplier performs the functions of an operator with regard to the said other users.

FIG. 1

FIG. 2

FIG. 3

FEUILLE DE REMPLACEMENT (REGLE 26)

**FIG. 4**

| NP | Long | RESERVE | |
|---|---|---|---|
| SAID | | | |
| ID CREATEUR DU JETON | | | |
| T | Q | N | ETAT |
| VNJ | | | |
| VNJ ( suite ) | | | |
| | | | |
| | | | |
| VNJ ( fin ) | | | |